# EUROPEAN PATENT SPECIFICATION

(11) **EP 3 796 511 B1**
(45) Date of publication and mention of the grant of the patent: **03.01.2024**
(21) Application number: 20152554.0
(22) Date of filing: 17.01.2020
(51) Int. Cl.: H02J 7/00

(54) **CHARGING METHOD, CHARGING DEVICE AND READABLE STORAGE MEDIUM**
LADEVERFAHREN, LADEVORRICHTUNG UND LESBARES SPEICHERMEDIUM
PROCÉDÉ DE CHARGE, DISPOSITIF DE CHARGE ET SUPPORT D'INFORMATIONS LISIBLE

(30) Priority: 23.09.2019 CN 201910901784
(43) Date of publication of application: 24.03.2021
(73) Proprietor: Beijing Xiaomi Mobile Software Co., Ltd., Beijing 100085 (CN)
(72) Inventor: ZHANG, Jinlong, Haidian District, Beijing 100085 (CN)
(74) Representative: Gevers Patents

(56) References cited:
- CN-A- 108 270 043
- US-A1- 2016 248 266

## Description

### TECHNICAL FIELD

The present disclosure relates to the technical field of battery charging, and particularly relates to a charging method, charging devices and a non-transitory computer readable storage medium.

### BACKGROUND

Electronic products on the market currently are provided with rechargeable batteries configured to charge electronic components in the electronic products, so that the electronic products may be continuously used and realize various functions. However, during charging of the batteries by a charging device, the batteries are usually charged only in accordance with a single charging mode, resulting in a problem that the charging efficiency is low or the aging rate of battery is fast.

CN 108270043 A discloses a battery charging method including that: batteries in a battery pack are subjected to voltage monitoring with a single battery as a unit, a charging strategy on the battery pack is determined, and the battery pack is charged according to a voltage monitoring result on the batteries.

US 2016/0248266A1 describes a control system configured to determine a charging strategy for charging the heterogeneous battery cells based on an analysis of a plurality of contextual factors. Different charging strategies that indicate which battery cells to charge and the way in which charging is to be conducted may be mapped to different combinations of the contextual factors. A selected charging strategy is then employed to distribute charging current from a power source among the heterogeneous battery cells in a manner designated by the selected charging strategy.

### SUMMARY

The invention is set out in the appended set of claims. Any embodiment in the description that does not fall within the scope of the claims shall be regarded as an example for understanding the present invention.

The present disclosure provides a charging method, a charging device and a readable storage medium.

A first aspect according to an embodiment of the present disclosure provides a charging method according to independent claim 1.

A second aspect according to an embodiment of the present disclosure provides a charging device according to independent claim 7.

A third aspect according to an embodiment of the present disclosure provides a charging device according to independent claim 12.

A fourth aspect according to an embodiment of the present disclosure provides a non-transitory computer readable storage medium according to independent claim 12 according to independent claim 13.

The technical solutions provided by the embodiments of the present disclosure may have the following beneficial effects.

In the embodiments of the present disclosure, the charging strategy is determined based on the cell characteristic parameters, and the battery is charged based on respective charging parameters corresponding to each charging strategy. On one hand, the cell characteristic parameters may better reflect the current charging state of the battery, and therefore, upon determination of a charging strategy based on the cell characteristic parameters, the battery may be charged by using a better charging strategy so as to improve the charging efficiency. On the other hand, in the embodiments of the present disclosure, instead of only adopting a single charging strategy, different charging strategies obtained in real time based on the cell characteristic parameters is used for charging of the battery. Therefore, a charging strategy suitable for the present cell may be selected for charging during charging of the battery to better protect the cell and prolong the service life of the cell, so as to prolong the service life of the entire battery and delay the aging of the battery.

It should be understood that the above general description and the following detailed description are merely exemplary and explanatory, and not intended to limit the present disclosure.

### BRIEF DESCRIPTION OF THE DRAWINGS

The accompanying drawings, which are incorporated in and constitute a part of this specification, illustrate embodiments consistent with the disclosure and serve to explain the principles of the disclosure together with the description.
FIG. 1 is a flowchart of a charging method according to an embodiment of the disclosure.
FIG. 2 is a schematic diagram of mapping between the number of times of charging cycles and a battery residual capacity ratio according to an exemplary embodiment.
FIG. 3 is a schematic diagram of required charging duration when adopting a charging strategy according to an exemplary embodiment.
FIG. 4 is a schematic diagram of step charge according to an exemplary embodiment.
FIG. 5 is a schematic diagram of charging a battery upon adoption of a charging strategy according to an exemplary embodiment.
FIG. 6 is a structural schematic diagram of a charging device according to an embodiment of the disclosure.
FIG. 7 is a structural diagram of a terminal device according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure. Instead, they are merely examples of apparatuses consistent with aspects related to the embodiments of the present disclosure as recited in the appended claims.

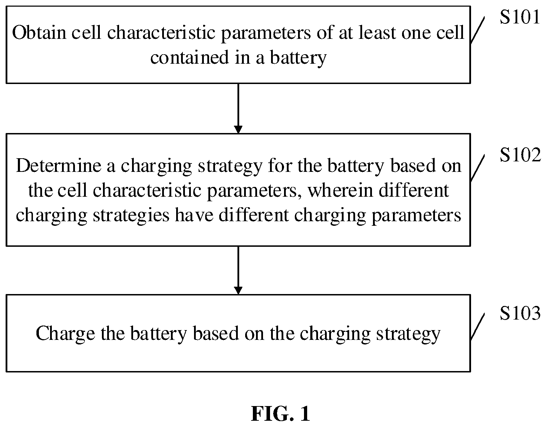

An embodiment of the present disclosure provides a charging method. FIG. 1 is a flowchart of a charging method according to an embodiment of the disclosure. As shown in FIG. 1, the charging method is applied to a charging device and includes the following operations.

In S 101, cell characteristic parameters of each of at least one cell contained in a battery are obtained.

In S 102, a charging strategy of the battery is determined based on the cell characteristic parameters. Each charging strategy corresponds to its respective charging parameters.

In S 103, the battery is charged based on the determined charging strategy.

In the embodiments of the present disclosure, the charging device is configured to charge the battery, and the battery is a rechargeable battery.

Exemplarily, the charging device includes, but not limited to, charging devices for mobile terminals such as mobile phone, vehicle charging device, and charging devices for various household electrical appliances. The battery includes, but is not limited to, a lithium battery, a nickel-cadmium (NiCd) battery, a nickel-hydrogen (NiH2) battery, and a lead-acid battery.

In the embodiments of the present disclosure, the battery includes at least one cell and a processing circuit. The cell is configured to store electric energy, and the processing circuit is configured to protect the cell or manage the electric energy stored in the cell. The cell characteristic parameters of each cell of the battery may be obtained through the processing circuit, and may accurately reflect the State of Charge (SOC) in the cell.

In exemplary embodiments, the cell characteristic parameters include, but not limited to, voltage of cell, current of cell, temperature of cell, directive current resistance (DCR) of cell, alternative current resistance (ACR) of cell and the number of times of charging cycles for which the cell has been charged, which are not limited in the embodiments of the present disclosure.

It should be noted that the battery may include one or more cells. When the battery includes one cell, the charging strategy of the battery may be directly determined according to respective cell characteristic parameters. When the battery includes a plurality of cells, if the plurality of cells are the same, the cell characteristic parameters corresponding to each of the plurality of same cells may be averaged, and the charging strategy of the battery is determined based on the averaged cell characteristic parameters; and if the plurality of cells are different, the cell characteristic parameters corresponding to each of the plurality of different cells may be weighted and averaged to determine the cell characteristic parameters of the different cells. As a result, the corresponding charging strategy is determined. In the process of weighting and averaging of the cell characteristic parameters for different cells, each weight value corresponding to a respective cell is related to capacity of the cell, and the weight value of the corresponding cell may be set according to different cell capacities. For example, if the capacity of cell is large, the weight of the calculated weight mean becomes large.

In the embodiments of the present disclosure, the battery involves different charging modes in a charging process, and different charging modes require different charging parameters. For example, when the charging mode is a constant voltage (CC) or constant current (CV) charging mode, charging parameters, such as cut-off charging current and cut-off charging voltage, are considered; and when the charging mode is a cycle charging mode, charging parameters, such as the health state, cycle charging voltage and cycle charging current of the battery, are considered. Therefore, charging parameters required for different charging modes are different.

It should be noted that when the charge strategy of the battery is determined, the charging strategy may include a charging mode, cell characteristic parameters corresponding to the charging mode, and charging parameters corresponding to the charging mode. For example, in a charging process, the charging device may firstly determine that the battery is in a CC/CV mode, and then determine the cut-off charging current and the cut-off charging voltage based on the cell characteristic parameters in a CC/CV charging mode.

In the embodiments of the present disclosure, after the charging strategy is determined, the battery is charged based on the charging strategy of the battery. If the charging strategy is that the charging parameters are determined to be the cut-off charging current and the cut-off charging voltage in a CC/CV mode, the battery may be charged according to the cut-off charging current and the cut-off charging voltage. If the charging strategy is that the charging parameters are determined to be a charging voltage of next charging cycle and a charging current of next charging cycle under a cycle charging mode, the cycle charge may be performed according to the charging voltage of next charging cycle and the charging current of next charging cycle.

It can be understood that in the embodiments of the present disclosure, the charging strategy may be flexibly determined according to the cell characteristic parameters which are changeable in a charging process, and the battery may be charged based on respective charging parameters corresponding to each of the different charging strategies, so that the charging mode is flexible and the charging efficiency is improved.

In an embodiment, the operation of determining the charging strategy for the battery based on the cell characteristic parameters includes:
determining the health state of the cell based on the DCR of the cell, the ACR of the cell and the number of times of charging cycles for which the cell has been charged; and
determining the charging current and charging voltage of the battery based on the health state of the cell.

In the embodiments of the present disclosure, the cycle charging mode of the battery is that when the charge of the battery is at a preset charge value, the battery is charged automatically and cyclically. In the cycle charging mode, the number of times of charging cycles for the battery may directly reflect degradation degree of the battery; and in the cycle charging mode, the DCR and the ACR of the cell in the battery will increase with the number of times of charging cycles. At this time, compared with a battery with a small number of times of charging cycles, charging duration of a battery with a large number of times of charging cycles is prolonged and the rechargeable capacity of the battery is reduced. Therefore, the DCR of the cell, the ACR of the cell and the number of times of charging cycles for which the cell has been charged may reflect the present health state of the cell.

The health state of cell in the battery is different for different using states of the battery. Furthermore, the charging duration and charging capacity for the battery are different in different health states of cell. For a battery with a good health state of cell, its corresponding DCR and ACR of the cell are smaller, the charging duration is shorter, and the rechargeable capacity of the battery is larger. For a battery with a poor health state of cell, its corresponding DCR and ACR of the cell are larger. Therefore, during charging of the battery with a poor health state of cell, the charging current and/or the charging voltage may be appropriately reduced, so that consumption of the electric energy by the cell is reduced to improve the charging efficiency.

It should be noted that with the increase of the number of times of charging cycles, the cell DC impedance and cell AC impedance of the battery are increased and the rechargeable capacity of the battery is reduced, so that the charging voltage and charging current required for cyclically charging of the battery are also reduced. If the battery is charged by adopting the previous charging voltage and charging current in a charging process, the charging efficiency may not be improved, and the battery may be in an overcharged state for a long time, which affects the service life of the battery. Therefore, in the embodiments of the present disclosure, after the health state of the cell is determined, the charging current and charging voltage for the next charge are flexibly adjusted according to different health states of cells.

That is, in the embodiments of the present disclosure, when the battery is cyclically charged, the battery is not cyclically charged directly according to a constant charging current and a constant charging voltage, but the charging current and the charging voltage are adjusted immediately according to different health states of the battery, and the battery is charged based on the adjusted charging voltage and charging current. In this way, determination of different respective charging parameters according to each charging strategy enables to adapt to changing requirements changed in different cycle stages, thereby prolonging the service life of the battery.

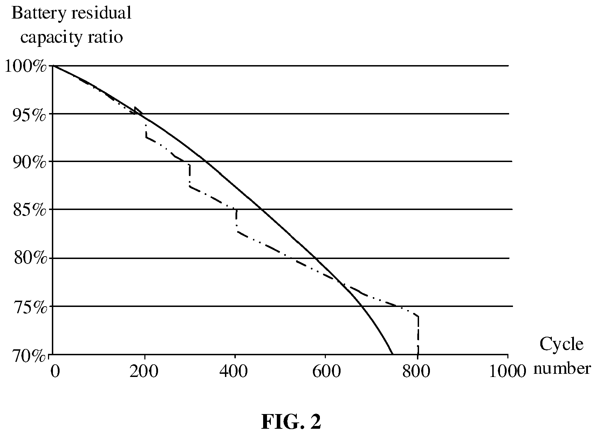

As shown in FIG. 2, a dotted line represents the mapping relationship between the number of times of charging cycles and battery residual capacity ratio upon charging of the battery by adopting a charging strategy in the embodiments of the present disclosure; and a solid line represents the mapping relationship between the number of times of charging cycles and battery residual capacity ratio upon charging of the battery without adopting a charging strategy. It can be seen from FIG. 2 that when the number of charging cycles for the battery is greater than 600 times, the battery residual capacity ratio when adopting the charge strategy is significantly higher than the battery residual capacity ratio without adopting the charging strategy. Visibly, in a cycle charging mode, the battery is charged by adopting the charging strategy provided in the embodiments of the present disclosure, that is, the charging current and charging voltage for next charging cycle are reasonably determined based on the health state of the battery to enable the charging current and the charging voltage to meet the need of the present rechargeable capacity of the battery, so that the cases of charging the battery for a long time by high voltage and heavy current is reduced, and thus degradation of the battery is delayed and the speed at which the battery residual capacity ratio decreases is slowed, thereby prolonging the service life of the battery.

In an embodiment, the operation of determining the charging strategy for the battery based on the cell characteristic parameters includes:
determining the cut-off charging voltage value of the battery under constant current charging mode according to the present voltage of the cell, the present current of the cell and the present temperature of the cell; and
the operation of charging the battery based on the charging strategy includes:
   charging the battery at a charging voltage less than the cut-off charging voltage value and a constant charging current under the constant current charging mode.

In another embodiment, the operation of determining the charging strategy for the battery based on the cell characteristic parameters includes:
determining the cut-off charging current value of the battery under the constant voltage charging mode according to the present voltage of the cell, the present current of the cell and the present temperature of the cell; and
the operation of charging the battery based on the charging strategy includes:
   charging the battery at a charging current greater than the cut-off charging current value and a constant charging voltage under the constant voltage charging mode.

In the embodiments of the present disclosure, in a constant current charging mode, the charging current of the battery is constant, and the charging voltage of the battery is gradually increased; and when the charging voltage of the battery reaches the cut-off charging voltage value, the constant current charging mode is stopped and converted into a constant voltage charging mode for subsequent charging of the battery. In a constant voltage charging mode, the charging voltage of the battery is constant, and the charging current of the battery is gradually decreased; and when the charging current of the battery is decreased to the cut-off charging current value, the constant voltage charging mode is stopped.

Because the corresponding cell voltage, cell current and cell temperature of the battery at different times in a charging process are different, the cut-off charging voltage value and cut-off charging current value required at different charging durations are also different. Furthermore, the environment in which the battery is located also affects the charging voltage and charging current required for the battery. For example, the cell temperature is lower in a low-temperature environment. At this time, the charging voltage and charging current for the battery are lower than the charging voltage and charging current for the battery in a normal temperature state. As can be seen, the change of the environment temperature also causes the change of the charging voltage and the charging current, resulting in change of the cut-off charging voltage value and the cut-off charging current value.

Based on the above, the embodiments of the present disclosure fully consider the parameters that affect settings of the cut-off charging voltage value and the cut-off charging current value, and propose a solution of determining the cut-off charging voltage value and the cut-off charging current value of the battery under CC/CV charging mode based on three cell characteristic parameters, including the present voltage of the cell, the present current of the cell and the present temperature of the cell.

That is, in the embodiments of the present disclosure, in a charging process, constant current charge and constant voltage charge are performed according to the adjusted cut-off charging voltage value and cut-off charging current value, so that the charging parameters may be flexibly adjusted in the charging process to improve the charging efficiency.

It can be understood that in a charging process, the constant current charging duration is very short relative to the constant voltage charging duration; and in a constant voltage charging process, the charging current is gradually decreased, and until it is decreased to the cut-off charge current value, the constant voltage charging mode is ended. Therefore, the constant voltage charging duration may be shortened by increasing the cut-off charging current value, thereby shortening the charging duration of the entire CC/CV charging mode and improving the charging efficiency.

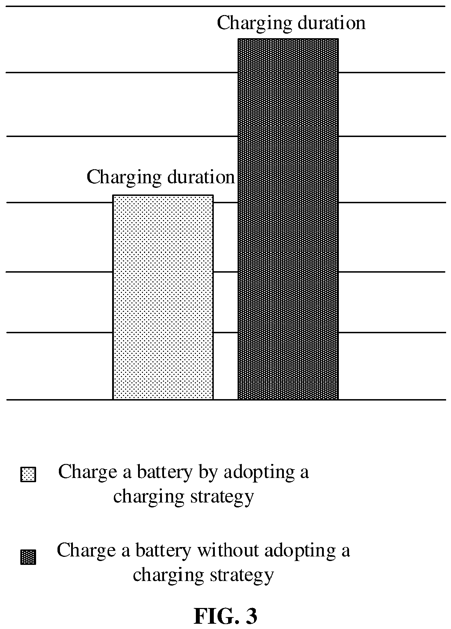

As shown in FIG. 3, a light-colored histogram represents the charging duration required for charging a battery of which the battery capacity is 4000mAH by adopting a charging strategy in a CC/CV charging mode according to an embodiment of the present disclosure; and a dark histogram represents the charging duration required for charging the battery without adopting a charging strategy. As can be seen from FIG. 3, the charging duration for charging the battery by adopting the charging strategy according to an embodiment of the present disclosure is much less than the charging duration for charging the battery without adopting the charging strategy. After verification, compared with the charging duration for charging the battery without adopting the charging strategy, the charging duration for charging the battery by adopting the charging strategy according to an embodiment of the present disclosure may be shortened by 45%, and the charging efficiency may be greatly improved.

In an embodiment, the method also includes:
detecting the current charging state of the battery during charging of the battery;
when the charging state of the battery is a float charging state, suspending charging of the battery to release the float charging state;
   and/or
when the charging state of the battery is a float charging state, perform control to accelerate discharging the battery to release the float charging state.

In the embodiments of the present disclosure, the float charging mode is a charging mode which is generated after the battery is charged to a certain stage. The float charging mode is characterized in that after a CC/CV charging mode, the battery is continuously charged with a current lower than a preset current threshold for a long time to enable the battery to be charged in the float charging mode. At this time, the charging state of the battery is a float charging state in the float charging mod. The preset current threshold may be set according to actual demands. For example, the preset current threshold may be 0.3mA, 0.5mA or 0.7mA.

It should be noted that the operation of suspending charging of the battery includes that charging of the battery is no longer continued. The operation of releasing the float charging state of the battery means that the charging state of the battery in the float charging state is no longer the float charging state.

Considering that there are safety risks such as battery swelling and battery leakage because the battery is in a float charging state for a long time, it is necessary to detect the present charging state of the battery to facilitate the subsequent timely processing of the battery in the float charging state to release the float charging state, so as to reduce occurrence of the safety risks during charging of the battery.

In an embodiment, the operation of detecting the current charging state of the battery includes:
obtaining the SOC of the battery; and
when the duration for which the SOC of the battery is greater than a first SOC threshold is a preset time period, determining that the battery is in a float charging state.

In the embodiments of the present disclosure, the SOC of the battery reflects the ratio or percentage that the battery residual capacity occupies the battery total capacity. When the SOC of the battery is 1, it indicates that the battery is in a full charge state. When the SOC of the battery is 0, it indicates that the battery is in a full discharging state. An upper threshold, namely a first SOC threshold of float charging of the battery in a float charging state may be set according to the rechargeable capacity of the battery. For example, when the rechargeable capacity of the battery is 98%, the first SOC threshold may be set to be 93% or 95%, which is not limited in the embodiments of the present disclosure.

It should be noted that the SOC of the battery is greater than the first SOC threshold in a float charging state, and therefore, the SOC of the battery may be reduced by suspending charging of the battery or accelerating discharging the battery so as to release the float charging state. It should be noted that the operation of accelerating discharging the battery may be enabling the battery to be in a working state actively. For example, when the battery is a battery of a mobile phone, accelerating of discharging the battery may be implemented by supplying power to components on the mobile phone through the battery.

In an embodiment, the method also includes:
when the SOC of the battery is less than a second SOC threshold, determining that the float charging state of the battery is released, where the second SOC threshold is less than the first SOC threshold.

In the embodiments of the present disclosure, the second SOC threshold may be set according to actual design requirements, so that the second SOC threshold is less than the first SOC threshold. For example, when the first SOC threshold is 95%, the second SOC threshold may be set to be 90%; and when the first SOC threshold is 93%, the second SOC threshold may be set to be 89%.

It should be noted that by setting the second SOC threshold to be less than the first SOC threshold, the battery may not be frequently switched between release of a float charging state and being in a float charging state, so that the battery is smoothly charged to reduce the influence on the battery caused by frequently switching between charging states.

It can be understood that in the embodiments of the present disclosure, when the battery is in a float charging state, the float charge state of the battery is released by suspending charging of the battery or accelerating discharging the battery, which enables to reduce safety risks, such as battery swelling and battery bulging, caused by charging of the battery at a current lower than a preset current threshold under a continuous voltage, thereby achieving protection of the charging safety during charging of the battery.

After the float charging state of the battery is released, the charging of the battery may be restored or the accelerating discharging the battery may be stopped, so as to increase the SOC of the battery. It should be noted that the operation of restoring the charging of the battery may be as follows: after the float charging state of the battery is released, the cell characteristic parameters of each cell involved in the battery are obtained continuously, the charging strategy for the battery is determined based on the cell characteristic parameters, and the battery is charged based on the charging strategy. For example, after the float charging state of the battery is released, the battery is in a cycle charging mode, and at this time, the operation of charging the battery based on the charging strategy includes: determining the present charging current and present charging voltage of the battery based on the health state of the cell so as to charge the battery based on the determined present charging voltage and present charging current.

In related technologies, different charging currents are set according to battery temperatures to charge the battery. The following table 1 shows charging modes at different temperatures, wherein CC represents constant current charging mode, CV represents constant voltage charging mode, 0.1C represents charging current, and "CC 0.1C to 4.4V, then CV to 200mA" means that under the constant current charging mode, the battery is charged at a constant current 0.1C as a charging current until the voltage of the battery is 4.4V, and then, under the constant voltage charging mode, the battery is charged at a constant voltage until the current of the battery is 200mA.

As illustrated in table 1, the charging mode is determined based on its corresponding temperature of the battery, which is only applied to charging of the battery in the constant current and constant voltage charging mode. The determination basis is single, and the charging efficiency for the battery is low.

**Table 1**

| Temperature | Charging mode |
|---|---|
| 0 to 5 °C | CC 0.1C to 4.4V, then CV to 200mA |
| 5 °C to 10 °C | CC 0.3C to 4.4V, then CV to 200mA |
| 10 °C to 15 °C | CC 0.5C to 4.4V, then CV to 200mA |
| 15 °C to 45 °C | CC 1.0C to 4.4V, then CV to 200mA |
| 45°C to 60 °C | CC 0.5C to 4.1V, then CV to 200mA |

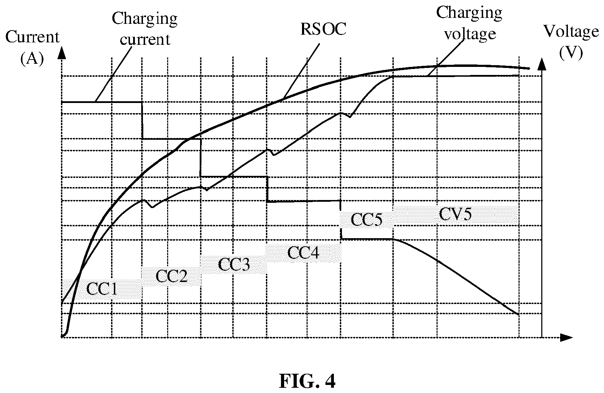

As shown in FIG. 4, FIG. 4 shows set of different multi-step charge according to battery temperature, battery current and battery voltage, where CC is constant current charge, and CV is constant voltage charge. As can be seen from FIG. 4, in a charging process, the CC charge is performed 5 times; and in a step charge process at a high voltage in a constant current charging mode, the charging current has a step decrease trend with the charging process, the has an increase trend with the charging process, and the ratio of SOC (RSOC) gradually increases with the charging process. Due to there is a sudden decrease between the constant current at two ends, the speed for charging the battery is affected, and the service life of the battery is also affected because of such long-time sudden decrease.

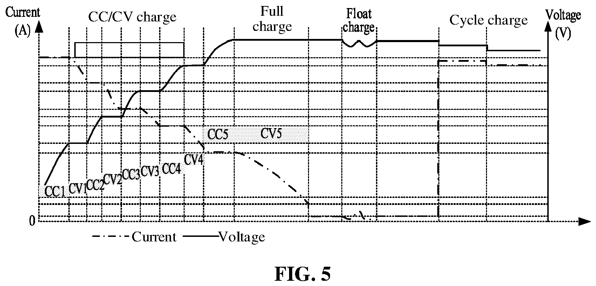

As shown in FIG. 5, FIG. 5 shows a schematic diagram of charging a battery by adopting a charging method provided by an embodiment of the present disclosure, where CC is constant current charge, and CV is constant voltage charge. As can be seen from FIG. 5 that the battery is sequentially charged for 5 times in CC/CV charge according to the adjusted cut-off charging voltage value and cut-off charging current value. The current does not suddenly decrease in different constant current charging modes, but decreases slowly until the battery is in a full charge state.

After the full charge state, the battery is in a float charge state, and the float charge state is released by accelerating discharge. According to a voltage fluctuation curve and a current fluctuation curve for charging, as shown in FIG. 5, the float charging duration may be effectively reduced, and battery safety risks, such as battery swelling and battery bulging, caused by charging of the battery with continuous constant voltage and small current may be reduced.

In a cycle charge mode, firstly, the health state of the cell is determined based on the DCR of the cell, the ACR of the cell and the number of times of charging cycles for which the cell has been charged; then, the charging current and charging voltage of the battery are determined based on the health state of the cell; and the battery is charged based on the determined charging current and charging voltage, so that the charging current and the charging voltage may be adjusted to prolong the service life of the battery. With the increase of the number of times of charging cycles, degradation of the battery occurs, and the DCR and ACR of the battery are increased, so that the charging current and charging voltage required for the battery are gradually decreased. As shown in FIG. 5, the charging voltage and charging current adopted in previous charging cycle are higher than the charging voltage and charging current adopted in the next charging cycle.

It should be noted that the terms "first", "second", "third" and "fourth" in the above embodiments of the present disclosure are merely convenient for expression and distinction, and have no other specific meanings.

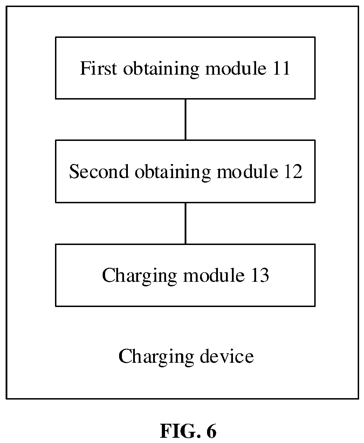

An embodiment of the present disclosure also provides a charging device. As shown in FIG. 6, a device 10 includes:
a first obtaining module 11 configured to obtain cell characteristic parameters of a cell contained in a battery;
a second obtaining module 12 configured to determine a charging strategy for the battery based on the cell characteristic parameters, wherein each charging strategy corresponding to its respective charging parameters; and
a charging module 13 configured to charge the battery based on the charging strategy.

In an embodiment, the second obtaining module 12 is configured to determine, in a cycle charging mode, the health state of the cell based on the DCR of the cell, the ACR of the cell and the number of times of charging cycles for which the cell has been charged, and determine the charging current and charging voltage of the battery based on the health state of the cell.

In an embodiment, the second obtaining module 12 is configured to determine, in a CV/CC charging mode, the cut-off charging voltage value of the battery under constant current charging mode according to the present voltage of the cell, the present current of the cell and the present temperature of the cell; and
the charging module 13 is configured to charge the battery at a charging voltage less than the cut-off charging voltage value and a constant charging current under constant current charging mode.

In an embodiment, the second obtaining module 12 is configured to determine, in a CV/CC charging mode, the cut-off charging current value of the battery under constant voltage charging mode according to the present voltage of the cell, the present current of the cell and the present temperature of the cell; and
the charging module 13 is configured to charge the battery at a charging current greater than the cut-off charging current value and a constant charging voltage under constant voltage charging mode.

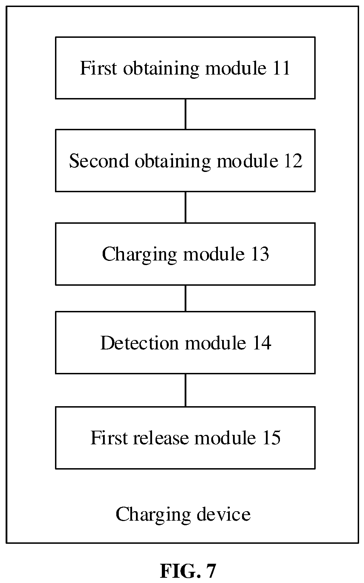

In an embodiment, as shown in FIG. 7, the device also includes:
a detection module 14 configured to detect the current charging state of the battery during charging of the battery; and
a first release module 15 configured to suspend charging of the battery to release the float charging state when the charging state of the battery is a float charging state, and/or perform control to accelerate discharging the battery to release the float charging state when the charging state of the battery is a float charging state.

In an embodiment, the detection module 14 is specifically configured to obtain the SOC of the battery, and determine that the battery is in a float charging state when the duration for which the SOC of the battery is greater than a first SOC threshold is a preset time period.

In an embodiment, the charging device also includes:
a second release module configured to determine that the float charging state of the battery is released when the SOC of the battery is less than a second SOC threshold, where the second SOC threshold is less than the first SOC threshold.

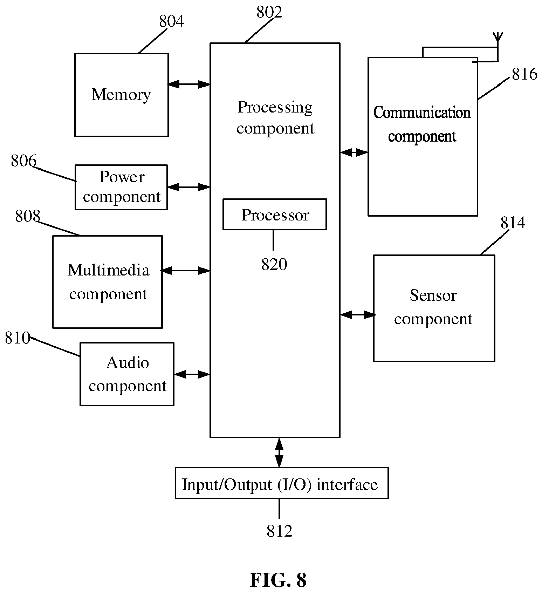

FIG. 8 is a structure diagram of a terminal device according to an exemplary embodiment. For example, a terminal device 800 may be a mobile phone, a computer, a digital broadcast terminal, a message receiving and sending device, a game console, a tablet device, a medical device, a fitness device, a personal digital assistant, and the like. Referring to FIG. 8, the terminal device 800 may include one or more of the following components: a processing component 802, a memory 804, a power component 806, a multimedia component 808, an audio component 810, an Input/Output (I/O) interface 812, a sensor component 814 and a communication component 816.

The processing component 802 usually controls the overall operations of the terminal device 800, such as operations related to display, telephone calls, data communications, camera operations and recording operations. The processing component 802 may include one or more processors 820 to execute instructions to perform all or part of the above method. Furthermore, the processing component 802 may include one or more modules which facilitate interaction between the processing component 802 and other components. For example, the processing component 802 may include a multimedia module to facilitate interaction between the multimedia component 808 and the processing component 802.

The memory 804 is configured to store various types of data to support operations of the terminal device 800. The examples of the data include instructions for any application programs or methods operated on the terminal device 800, contact data, phone book data, messages, pictures, videos, and the like. The memory 804 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power component 806 supplies power to various components of the terminal device 800. The power component 806 may include a power management system, one or more power supplies, and other components associated with generation, management and distribution of power for the terminal device 800.

The multimedia component 808 includes a screen providing an output interface between the terminal device 800 and a user. In some embodiments, the screen may include a Liquid Crystal Display (LCD) and a Touch Panel (TP). If the screen includes the TP, the screen may be implemented as a touch screen to receive input signals from users. The TP includes one or more touch sensors to sense touches, slides and gestures on the TP. The touch sensor may not only sense the boundary of the touch or slide operation, but also detect the duration and pressure related to the touch or slide operation. In some embodiments, the multimedia component 808 includes a front camera and/or a rear camera. When the terminal device 800 is in an operation mode, such as a shooting mode or a video mode, the front camera and/or the rear camera may receive external multimedia data. Each of the front camera and the rear camera may be a fixed optical lens system or have focal length and optical zoom capabilities.

The audio component 810 is configured to output and/or input audio signals. For example, the audio component 810 includes a microphone (MIC), and the MIC is configured to receive external audio signals when the terminal device 800 is in an operation mode, such as a call mode, a recording mode and a voice recognition mode. The received audio signals may be further stored in the memory 804 or sent through the communication component 816. In some embodiments, the audio component 810 also includes a loudspeaker configured to output audio signals.

The I/O interface 812 provides an interface between the processing component 802 and a peripheral interface module, and the peripheral interface module may be a keyboard, a click wheel, a button, and the like. These buttons may include, but are not limited to, a Home button, a Volume button, a Start button and a Lock button.

The sensor component 814 includes one or more sensors configured to provide state evaluation of various aspects to the terminal device 800. For example, the sensor component 814 may detect an on/off status of the terminal device 800 and the relative positioning of the components such as a display and a keypad of the terminal device 800, and the sensor component 814 may also detect a change in a position of the terminal device 800 or a component of the terminal device 800, the presence or absence of contact between a user and the terminal device 800, the orientation or acceleration/deceleration of the terminal device 800, and the temperature change of the terminal device 800. The sensor component 814 may include a proximity sensor configured to detect the presence of nearby objects without any physical contact. The sensor component 814 may also include an optical sensor, such as a CMOS or CCD image sensor for use in imaging applications. In some embodiments, the sensor component 814 may also include an acceleration sensor, a gyro sensor, a magnetic sensor, a pressure sensor or a temperature sensor.

The communication component 816 is configured to facilitate wired or wireless communication between the terminal device 800 and other devices. The terminal device 800 may access a communication-standard-based wireless network, such as a Wireless Fidelity (Wi-Fi) network, a 2nd-Generation (2G) or 3rd-Generation (3G) network, or a combination thereof. In an exemplary embodiment, the communication component 816 receives broadcast signals or broadcast related information from an external broadcast management system through a broadcast channel. In an exemplary embodiment, the communication component 816 also includes a Near Field Communication (NFC) module to promote short range communication. For example, the NFC module may be implemented based on a Radio Frequency Identification (RFID) technology, an Infrared Data Association (IrDA) technology, an Ultra Wide Band (UWB) technology, a Bluetooth (BT) technology and other technologies.

In an exemplary embodiment, the terminal device 800 may be implemented by one or more of an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor or other electronic components, and configured to execute the above method.

In an exemplary embodiment, the present disclosure also provides a non-transitory computer readable storage medium including instructions, such as the memory 804 including instructions, and the instructions may be executed by the processor 820 of the terminal device 800 to complete the above charging method. For example, the non-transitory computer readable storage medium may be a Read-Only Memory (ROM), a Random Access Memory (RAM), a Compact Disc Read-Only Memory (CD-ROM), a magnetic tape, a floppy disk, an optical data storage device, and the like.

When an instruction in a non-transitory computer readable storage medium is executed by a processor of a mobile terminal, the mobile terminal may execute a charging method. The method may include the following operations:
obtaining cell characteristic parameters of each of at least one cell contained in a battery;
determining a charging strategy for the battery based on the cell characteristic parameters, wherein each charging strategy corresponds to its respective charging parameters; and
charging the battery based on the charging strategy.

Other embodiments of the disclosure will be apparent to those skilled in the art from consideration of the specification and practice of the disclosure here. This application is intended to cover any variations, uses, or adaptations of the disclosure following the general principles thereof and including such departures from the disclosure as come within known or customary practice in the art. It is intended that the specification and embodiments be considered as exemplary only, with a true scope of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A charging method, the method comprising:
obtaining (S 101) cell characteristic parameters of at least one cell contained in a battery;
determining (S 102) a charging strategy for the battery based on the cell characteristic parameters, wherein different charging strategies correspond to respective charging parameters; and
charging (S103) the battery based on the charging strategy,
**characterized by**,
wherein determining (S101) the charging strategy for the battery based on the cell characteristic parameters comprises:
under a constant voltage charging mode, determining a cut-off charging current of the battery according to a present voltage of the cell, a present current of the cell and a present temperature of the cell; and
the charging the battery based on the charging strategy comprises:
under a constant voltage charging mode, charging the battery at a charging current greater than the cut-off charging current and a constant charging voltage.

2. The method of claim 1, wherein determining (S102) the charging strategy for the battery based on the cell characteristic parameters comprises:
determining, under a cycle charging mode, a health state of each cell based on a directive current resistance, DCR, of the cell, an alternative current resistance, ACR, of the cell and a number of times of charging cycles for which the cell has been charged; and
determining a charging current and a charging voltage of the battery based on the health state of the cell.

3. The method of claim 1, wherein determining (S101) the charging strategy for the battery based on the cell characteristic parameters comprises:
under a constant current charging mode, determining a cut-off charging voltage of the battery according to a present voltage of the cell, a present current of the cell and a present temperature of the cell; and
charging the battery based on the charging strategy comprises:
charging the battery at a charging voltage less than the cut-off charging voltage and a constant charging current under the constant current charging mode.

4. The method of any one of claims 1 to 3, further comprising:
detecting a present charging state of the battery during charging of the battery;
when the present charging state of the battery is a float charging state, suspending charging of the battery to release the float charging state; and/or
when the charging state of the battery is the float charging state, performing control to accelerate discharging the battery to release the float charging state.

5. The method of claim 4, wherein detecting the present charging state of the battery comprises:
obtaining a state of charge, SOC, of the battery; and
when a duration for which the SOC of the battery is greater than a first SOC threshold is a preset time period, determining that the battery is in the float charging state.

6. The method of claim 5, further comprising:
when the SOC of the battery is less than a second SOC threshold, determining that the float charging state of the battery is released, wherein the second SOC threshold is less than the first SOC threshold.

7. A charging device, the device comprising:
a first obtaining module (11), configured to obtain cell characteristic parameters of at least one cell contained in a battery;
a second obtaining module (12), configured to determine a charging strategy for the battery based on the cell characteristic parameters, wherein different charging strategies corresponding to respective charging parameters; and
a charging module (13), configured to charge the battery based on the charging strategy,
**characterized by**,
wherein the second obtaining module (12) is further configured to determine a cut-off charging current of the battery under a constant voltage charging mode according to a present voltage of the cell, a present current of the cell and a present temperature of the cell; and
the charging module (13) is further configured to charge the battery at a charging current greater than the cut-off charging current and a constant charging voltage under a constant voltage charging mode.

8. The device of claim 7, wherein the second obtaining module (12) is configured to determine, under a cycle charging mode, a health state of each cell based on a directive current resistance, DCR, of the cell, an alternative current resistance, ACR, of the cell and a number of times of charging cycles for which the cell has been charged, and determine a charging current and a charging voltage of the battery based on the health state of the cell.

9. The device of claim 8, wherein
the second obtaining module (12) is configured to under a constant current charging mode, determine a cut-off charging voltage of the battery according to a present voltage of the cell, a present current of the cell and a present temperature of the cell; and
the charging module (13) is configured to charge the battery at a charging voltage less than the cut-off charging voltage and a constant charging current under the constant current charging mode.

10. The device of any one of claims 7 to 9, further comprising:
a detection module (14), configured to detect a present charging state of the battery during charging of the battery; and
a first release module (15), configured to suspend charging of the battery to release a float charging state when the present charging state of the battery is the float charging state, and/or, perform control to accelerate discharging the battery to release the float charging state when the charging state of the battery is a float charging state.

11. The device of claim 10, wherein the detection module (14) is configured to:
obtain a state of charge, SOC, of the battery; and
determine that the battery is in the float charging state when a duration for which the SOC of the battery is greater than a first SOC threshold is a preset time period.

12. A charging device, comprising: a processor and a memory configured to store executable instructions capable of running on the processor, wherein
when the executable instructions are running on the processor, the executable instructions implement the charging method according to any one of claims 1 to 6.

13. A non-transitory computer readable storage medium having stored therein computer-executable instructions that, when being executed by a processor, implement the charging method according to any one of claims 1 to 6.

## Patentansprüche

1. Ladeverfahren, wobei das Verfahren umfasst:
Erhalten (S101) von für eine Zelle charakteristischen Parametern mindestens einer Zelle, die in einer Batterie enthalten ist;
Bestimmen (S102) einer Ladestrategie für die Batterie basierend auf den für die Zelle charakteristischen Parametern, wobei unterschiedliche Ladestrategien jeweiligen Ladeparametern entsprechen; und
Laden (S103) der Batterie basierend auf der Ladestrategie,
**gekennzeichnet durch**,
wobei das Bestimmen (S101) der Ladestrategie für die Batterie basierend auf den für die Zelle charakteristischen Parametern umfasst:
in einem Lademodus mit konstanter Spannung, Bestimmen eines Abschaltladestroms der Batterie gemäß einer aktuellen Spannung der Zelle, einem aktuellen Strom der Zelle und einer aktuellen Temperatur der Zelle; und
das Laden der Batterie basierend auf der Ladestrategie umfasst:
in einem Lademodus mit konstanter Spannung, Laden der Batterie mit einem Ladestrom, der größer ist als der Abschaltladestrom, und einer konstanten Ladespannung.

2. Verfahren nach Anspruch 1, wobei das Bestimmen (S102) der Ladestrategie für die Batterie basierend auf den für die Zelle charakteristischen Parametern umfasst:
Bestimmen, in einem Zyklus-Lademodus, eines Gesundheitszustands einer jeden Zelle basierend auf einem Gleichstromwiderstand, DCR, der Zelle, einem Wechselstromwiderstand, ACR, der Zelle und einer Anzahl von Malen von Ladezyklen, in denen die Zelle geladen worden ist; und
Bestimmen eines Ladestroms und einer Ladespannung der Batterie basierend auf dem Gesundheitszustand der Zelle.

3. Verfahren nach Anspruch 1, wobei das Bestimmen (S101) der Ladestrategie für die Batterie basierend auf den für die Zelle charakteristischen Parametern umfasst:
in einem Lademodus mit konstantem Strom, Bestimmen einer Abschaltladespannung der Batterie gemäß einer aktuellen Spannung der Zelle, einem aktuellen Strom der Zelle und einer aktuellen Temperatur der Zelle; und
das Laden der Batterie basierend auf der Ladestrategie umfasst: Laden der Batterie mit einer Ladespannung, die kleiner ist als die Abschaltladespannung, und einem konstanten Ladestrom in dem Lademodus mit konstantem Strom.

4. Verfahren nach einem der Ansprüche 1 bis 3, weiter umfassend:
Erkennen eines aktuellen Ladezustands der Batterie während des Ladens der Batterie;
wenn der aktuelle Ladezustand der Batterie ein Erhaltungsladezustand ist, Unterbrechen des Ladens der Batterie, um den Erhaltungsladezustand freizugeben; und/oder
wenn der Ladezustand der Batterie der Erhaltungsladezustand ist, Durchführen einer Steuerung, um das Entladen der Batterie zu beschleunigen, um den Erhaltungsladezustand freizugeben.

5. Verfahren nach Anspruch 4, wobei das Erkennen des aktuellen Ladezustands der Batterie umfasst:
Erhalten eines Ladezustands, SOC, der Batterie; und
wenn eine Dauer, in welcher der SOC der Batterie größer ist als ein erster SOC-Schwellenwert, eine voreingestellte Zeitspanne ist, Bestimmen, dass sich die Batterie im Erhaltungsladezustand befindet.

6. Verfahren nach Anspruch 5, weiter umfassend:
wenn der SOC der Batterie kleiner ist als ein zweiter SOC-Schwellenwert, Bestimmen, dass der Erhaltungsladezustand der Batterie freigegeben wird, wobei der zweite SOC-Schwellenwert kleiner ist als der erste SOC-Schwellenwert.

7. Ladevorrichtung, wobei die Vorrichtung umfasst:
ein erstes Erhaltemodul (11), das konfiguriert ist, um für eine Zelle charakteristische Parameter mindestens einer Zelle zu erhalten, die in einer Batterie enthalten ist;
ein zweites Erhaltemodul (12), das konfiguriert ist, um eine Ladestrategie für die Batterie basierend auf den für die Zelle charakteristischen Parametern zu bestimmen, wobei unterschiedliche Ladestrategien jeweiligen Ladeparametern entsprechen; und
ein Lademodul (13), das konfiguriert ist, um die Batterie basierend auf der Ladestrategie zu laden,
**gekennzeichnet durch**,
wobei das zweite Erhaltemodul (12) weiter konfiguriert ist, um einen Abschaltladestrom der Batterie in einem Lademodus mit konstanter Spannung gemäß einer aktuellen Spannung der Zelle, einem aktuellen Strom der Zelle und einer aktuellen Temperatur der Zelle zu bestimmen; und
das Lademodul (13) weiter konfiguriert ist, um die Batterie in einem Lademodus mit konstanter Spannung mit einem Ladestrom, der größer ist als der Abschaltladestrom, und einer konstanten Ladespannung zu laden.

8. Vorrichtung nach Anspruch 7, wobei das zweite Erhaltemodul (12) konfiguriert ist, um in einem Zyklus-Lademodus einen Gesundheitszustand einer jeden Zelle basierend auf einem Gleichstromwiderstand, DCR, der Zelle, einem Wechselstromwiderstand, ACR, der Zelle und einer Anzahl von Malen von Ladezyklen, in denen die Zelle geladen wurde, zu bestimmen, und einen Ladestrom und eine Ladespannung der Batterie basierend auf dem Gesundheitszustand der Zelle zu bestimmen.

9. Vorrichtung nach Anspruch 8, wobei
das zweite Erhaltemodul (12) konfiguriert ist, um in einem Lademodus mit konstantem Strom eine Abschaltladespannung der Batterie gemäß einer aktuellen Spannung der Zelle, einem aktuellen Strom der Zelle und einer aktuellen Temperatur der Zelle zu bestimmen; und
das Lademodul (13) konfiguriert ist, um die Batterie im Lademodus mit konstantem Strom mit einer Ladespannung, die kleiner ist als die Abschaltladespannung, und einem konstanten Ladestrom zu laden.

10. Vorrichtung nach einem der Ansprüche 7 bis 9, weiter umfassend:
ein Erkennungsmodul (14), das konfiguriert ist, um während des Ladens der Batterie einen aktuellen Ladezustand der Batterie zu erkennen; und
ein erstes Freigabemodul (15), das konfiguriert ist, um das Laden der Batterie zu unterbrechen, um einen Erhaltungsladezustand freizugeben, wenn der aktuelle Ladezustand der Batterie der Erhaltungsladezustand ist, und/oder eine Steuerung durchzuführen, um das Entladen der Batterie zu beschleunigen, um den Erhaltungsladezustand freizugeben, wenn der Ladezustand der Batterie ein Erhaltungsladezustand ist.

11. Vorrichtung nach Anspruch 10, wobei das Erkennungsmodul (14) konfiguriert ist, um:
einen Ladezustand, SOC, der Batterie zu erhalten; und
zu bestimmen, dass sich die Batterie im Erhaltungsladezustand befindet, wenn eine Dauer, in welcher der SOC der Batterie größer ist als ein erster SOC-Schwellenwert, eine voreingestellte Zeitspanne ist.

12. Ladevorrichtung, umfassend: einen Prozessor und einen Speicher, der konfiguriert ist, um ausführbare Anweisungen zu speichern, die imstande sind, in dem Prozessor zu laufen, wobei
wenn die ausführbaren Anweisungen in dem Prozessor laufen, die ausführbaren Anweisungen das Ladeverfahren nach einem der Ansprüche 1 bis 6 umsetzen.

13. Nichtflüchtiges computerlesbares Speichermedium, welches darin gespeichert computerausführbare Anweisungen aufweist, die, wenn sie von einem Prozessor ausgeführt werden, das Ladeverfahren nach einem der Ansprüche 1 bis 6 umsetzen.

## Revendications

1. Procédé de charge, le procédé comprenant :
l'obtention (S101) de paramètres caractéristiques d'élément d'au moins un élément contenu dans une batterie ;
la détermination (S102) d'une stratégie de charge pour la batterie sur la base des paramètres caractéristiques d'élément, dans lequel différentes stratégies de charge correspondent à des paramètres de charge respectifs ; et
la charge (S103) de la batterie sur la base de la stratégie de charge,
**caractérisé par**,
dans lequel la détermination (S101) de la stratégie de charge pour la batterie sur la base des paramètres caractéristiques d'élément comprend :
dans un mode de charge à tension constante, la détermination d'un courant de coupure de charge de la batterie en fonction d'une tension actuelle de l'élément, d'un courant actuel de l'élément et d'une température actuelle de l'élément ; et
la charge de la batterie sur la base de la stratégie de charge comprend :
dans un mode de charge à tension constante, la charge de la batterie à un courant de charge supérieur au courant de coupure de charge et à une tension constante de charge.

2. Procédé selon la revendication 1, dans lequel la détermination (S102) de la stratégie de charge pour la batterie sur la base des paramètres caractéristiques d'élément comprend :
la détermination, dans un mode de charge cyclique, d'un état d'intégrité de chaque élément sur la base d'une résistance au courant continu, DCR, de l'élément, d'une résistance au courant alternatif, ACR, de l'élément et d'un nombre de cycles de charge pendant lesquels l'élément a été chargé ; et
la détermination d'un courant de charge et d'une tension de charge de la batterie sur la base de l'état d'intégrité de l'élément.

3. Procédé selon la revendication 1, dans lequel la détermination (S101) de la stratégie de charge pour la batterie sur la base des paramètres caractéristiques d'élément comprend :
dans un mode de charge à courant constant, la détermination d'une tension de coupure de charge de la batterie en fonction d'une tension actuelle de l'élément, d'un courant actuel de l'élément et d'une température actuelle de l'élément ; et
la charge de la batterie sur la base de la stratégie de charge comprend :
la charge de la batterie à une tension de charge inférieure à la tension de coupure de charge et à un courant de charge constant dans le mode de charge à courant constant.

4. Procédé selon l'une quelconque des revendications 1 à 3, comprenant en outre :
la détection d'un état de charge actuel de la batterie pendant la charge de la batterie ;
lorsque l'état de charge actuel de la batterie est un état de charge d'entretien, l'interruption de la charge de la batterie pour sortir de l'état de charge d'entretien ; et/ou
lorsque l'état de charge de la batterie est l'état de charge d'entretien, la réalisation d'une commande pour accélérer la décharge de la batterie pour sortir de l'état de charge d'entretien.

5. Procédé selon la revendication 4, dans lequel la détection de l'état de charge actuel de la batterie comprend :
l'obtention d'un état de charge, SOC, de la batterie ; et
lorsqu'une durée pendant laquelle le SOC de la batterie est supérieur à un premier seuil de SOC est une période de temps prédéfinie, la détermination que la batterie est dans l'état de charge d'entretien.

6. Procédé selon la revendication 5, comprenant en outre :
lorsque le SOC de la batterie est inférieur à un second seuil de SOC, la détermination de la sortie de l'état de charge d'entretien de la batterie, dans lequel le second seuil de SOC est inférieur au premier seuil de SOC.

7. Dispositif de charge, le dispositif comprenant :
un premier module d'obtention (11), configuré pour obtenir des paramètres caractéristiques d'élément d'au moins un élément contenu dans une batterie ;
un second module d'obtention (12), configuré pour déterminer une stratégie de charge pour la batterie sur la base des paramètres caractéristiques d'élément, dans lequel différentes stratégies de charge correspondent à des paramètres de charge respectifs ; et
un module de charge (13), configuré pour charger la batterie sur la base de la stratégie de charge,
**caractérisé par**,
dans lequel le second module d'obtention (12) est en outre configuré pour déterminer un courant de coupure de charge de la batterie dans un mode de charge à tension constante en fonction d'une tension actuelle de l'élément, d'un courant actuel de l'élément et d'une température actuelle de l'élément ; et
le module de charge (13) est en outre configuré pour charger la batterie à un courant de charge supérieur au courant de coupure de charge et à une tension constante de charge dans un mode de charge à tension constante.

8. Dispositif selon la revendication 7, dans lequel le second module d'obtention (12) est configuré pour déterminer, dans un mode de charge cyclique, un état d'intégrité de chaque élément sur la base d'une résistance au courant continu, DCR, de l'élément, d'une résistance au courant alternatif, ACR, de l'élément et d'un nombre de cycles de charge pendant lesquels l'élément a été chargé, et déterminer un courant de charge et une tension de charge de la batterie sur la base de l'état d'intégrité de l'élément.

9. Dispositif selon la revendication 8, dans lequel
le second module d'obtention (12) est configuré pour, dans un mode de charge à courant constant, déterminer une tension de coupure de charge de la batterie en fonction d'une tension actuelle de l'élément, d'un courant actuel de l'élément et d'une température actuelle de l'élément ; et
le module de charge (13) est configuré pour charger la batterie à une tension de charge inférieure à la tension de coupure de charge et à un courant de charge constant dans le mode de charge à courant constant.

10. Dispositif selon l'une quelconque des revendications 7 à 9, comprenant en outre :
un module de détection (14), configuré pour détecter un état de charge actuel de la batterie pendant la charge de la batterie ; et
un premier module de sortie (15), configuré pour interrompre la charge de la batterie pour sortir d'un état de charge d'entretien lorsque l'état de charge actuel de la batterie est l'état de charge d'entretien, et/ou, effectuer une commande pour accélérer la décharge de la batterie pour sortir de l'état de charge d'entretien lorsque l'état de charge de la batterie est un état de charge d'entretien.

11. Dispositif selon la revendication 10, dans lequel le module de détection (14) est configuré pour :
obtenir un état de charge, SOC, de la batterie ; et
déterminer que la batterie est dans l'état de charge d'entretien lorsqu'une durée pendant laquelle le SOC de la batterie est supérieur à un premier seuil de SOC est une période de temps prédéfinie.

12. Dispositif de charge, comprenant : un processeur et une mémoire configurée pour stocker des instructions exécutables capables de s'exécuter sur le processeur, dans lequel
lorsque les instructions exécutables s'exécutent sur le processeur, les instructions exécutables mettent en oeuvre le procédé de charge selon l'une quelconque des revendications 1 à 6.

13. Support de stockage non transitoire lisible par ordinateur sur lequel sont stockées des instructions exécutables par ordinateur qui, lorsqu'elles sont exécutées par un processeur, mettent en oeuvre le procédé de charge selon l'une quelconque des revendications 1 à 6.
